# EUROPEAN PATENT APPLICATION

(11) **EP 1 978 671 A1**
(43) Date of publication of application: **08.10.2008**
(21) Application number: 07252640.3
(22) Date of filing: 29.06.2007
(51) Int. Cl.: H04L 12/24, G06Q 10/00

(54) **Knowledge management system and method for implementing management software using the same**

(30) Priority: 02.04.2007 US 909711 P; 15.05.2007 US 748501
(71) Applicant: Inventec Corporation, Shih-Lin District Taipei City (TW)
(72) Inventor: Yeung, Alan S, Burlingame, CA 94010 (US); Cha, Deming, Palo Alto, CA 94303 (US); Pang, Nicholas Y., San Mateo, CA 94403 (US)
(74) Representative: Chamberlain, Alan James

(57) **Abstract**

A knowledge management system (KMS) and a method for implementing management software using the KMS are provided. In the present method, a network configuration module is used for obtaining a domain name of a network connecting the knowledge management system and network configuration data of a plurality of peripheral hosts in the network so as to connect the management host with the peripheral hosts. A software licensing module is then used for obtaining the software licensing data of a plurality of application programs required by the management software to verify the legitimacy of the application programs. A software configuration module is used for obtaining configuration data of the application programs to enable the management software to make use of the resource of the application programs. Therefore, the implementation process of the management software is simplified and the flexibility for modifying and updating configuration parameters is enhanced.

## Description

### BACKGROUND OF THE INVENTION

### 1. Field of the Invention

The present invention generally relates to a method for installing software, and in particular, to a method for implementing Enterprise software using a knowledge management system.

### 2. Description of Related Art

Along with the advance in information technology and the diversity of enterprise business, enterprises have developed various information systems meeting the demands for managing information in each of the departments. These information systems collect and record a large sum of data from the departments. However, the departments usually have their own requirements for the information systems, which result in that each of the information systems may only work for individual department independently and the data among different information systems cannot be exchanged.

As the enterprises move forward to globalization, the communications between different branches or departments have become an inevitable issue, and how to exchange data among different information systems is more crucial. The enterprises need to contribute more efforts and costs for maintaining these information systems and ensuring the correctness and consistency of the data therein.

Under the aforesaid situation of strong demands on data integration, a solution called Enterprise Resource Planning (ERP) system that can fit the need of managing information and enhance the competitiveness of the enterprise was derived. The ERP system is application software used for integrating and combining the data of the departments, such as financial, accounting, production, material management, quality assurance, marketing, and human resource departments, in a company. When the development of the ERP system tends to be mature, the company may connect all of their branches with the global financial/production/marketing system, so as to instantly analyze the quality and specifications of the products, and obtain useful information such as profits and client satisfaction.

In addition to the ERP system that provides the integration of enterprise resources and the synchronization of data, software vendors also design a series of business-oriented software according to various enterprise flows and demands. The software collaborates with the ERP system and makes use of the database of the ERP system so as to improve the effectiveness of the operation. The software is the so called Enterprise software.

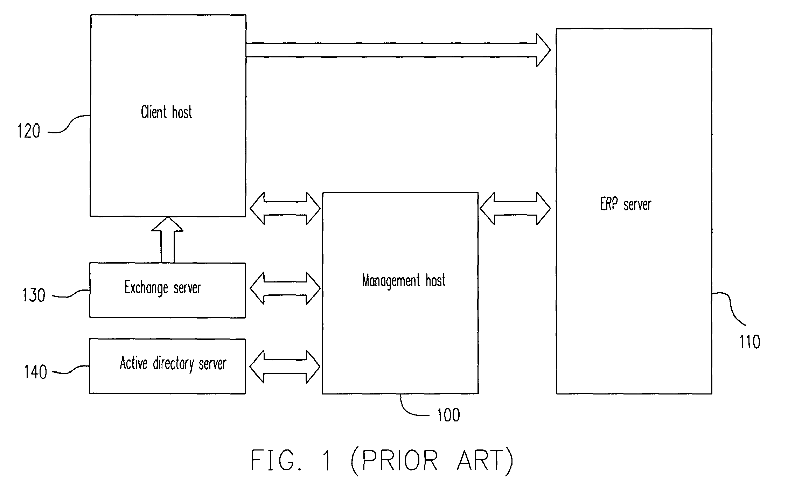

FIG. 1 is a schematic diagram illustrating a conventional method for implementing the Enterprise software. Referring to FIG. 1, a computer is selected as a management host 100 and connected with the intranet of the company to link to a plurality of servers existing in the company, such as an ERP server 110, an exchange server 130, and an active directory service server 140. When the configurations and parameters of the Enterprise software and the application software installed in the aforesaid servers are set, the implementation of the Enterprise software is completed. At this time, the employees of the company may use a client host 120 to link to the management host 100 and execute management functions provided by the Enterprise software.

However, the ERP system is bulky and complicated. When implementing the Enterprise software with the ERP system, a large sum of parameters, sophisticated processes, and repeated tests need to be carried out, such that the Enterprise software can comply with the ERP system precisely and operate normally. Accordingly, the implementation of the Enterprise software always requires support from professional experts. Through cooperation of experienced consultants from software vendors with the staffs from the management information system (MIS) department of the company for a few weeks or months, the desired software and parameters required by the Enterprise software are able to be fully implemented. As a result, the company has to spend considerable money and manpower on accomplishing the implementation. Moreover, when there is a need to maintain or update the Enterprise software, same troublesome implementing procedures have to be undergone, which is not only time consuming but laborious.

### SUMMARY OF THE INVENTION

Accordingly, the present invention is directed to a method for implementing management software using a knowledge management system, wherein the data required for implementing the management software is collected and arranged by the knowledge management system. The parameters are obtained sequentially according to the requirement of implementing the management software and used for updating a knowledge management database in the knowledge management system, so as to achieve the purpose for simplifying the implementation of the management software.

The present invention provides a knowledge management system, used for providing the data required for implementing management software in a management host. The system comprises a knowledge management database, a network configuration module, a software licensing module, and a software configuration module. The knowledge management database includes a plurality of knowledgebase tables, each of which records software licensing data, network configuration data, and software configuration data. The network configuration module is used for obtaining a domain name of a network connecting the knowledge management system and the network configuration data of a plurality of peripheral hosts in the network so as to connect the management host with the peripheral hosts and update the network configuration data in the corresponding knowledgebase table. The software licensing module is used for obtaining the software licensing data of a plurality of application programs required by the management software to verify the legitimacy of the application programs and update the software licensing data in the knowledgebase table. The software configuration module is used for obtaining configuration data of the application programs to enable the management software to make use of the resource of the application programs and update the software configuration data in the knowledgebase table.

According to an embodiment of the present invention, the system further comprises a software downloading module, which is used for connecting an external network server to download at least one of the application programs required by the management software.

The present invention provides a method for implementing management software using a knowledge management system, suitable for implementing management software in a management host according to the data provided by a knowledge management system. In the present method, a domain name of a network connecting the knowledge management system and network configuration data of a plurality of peripheral hosts in the network are obtained, so as to connect the management host with the peripheral hosts and update the network configuration data in a knowledge management database of the knowledge management system through a network configuration module of the knowledge management system. Then, software licensing data of a plurality of application programs installed in the peripheral hosts required by the management software are obtained, so as to verify the legitimacy of the application programs and update the software licensing data in the knowledge management database through a software licensing module of the knowledge management system. Moreover, software configuration data of the application programs are obtained to enable the management software to make use of the resource of the application programs and update the software configuration data in the knowledge management database through a software configuration module of the knowledge management system.

According to an embodiment of the present invention, wherein the knowledge management database comprises a plurality of knowledgebase tables, each of which corresponds to different management software and records the network configuration data, software licensing data, and software configuration data of the management software.

According to an embodiment of the present invention, the step of obtaining software licensing data of the application programs to verify the legitimacy of the application programs comprises following steps. First, application programs required by the management software are read from the knowledge management database. Next, entries of the software licensing data corresponding to each of the application programs are requested. The inputted software licensing data are received and recorded into the knowledge management database. Then, the software licensing data is determined whether validated by the application. The implementing procedure of the management software is continued if the software licensing data is valid. On the other hand, the implementing procedure of the management software is suspended if the software licensing data is invalid.

According to an embodiment of the present invention, after reading application programs, the method further comprises searching the application programs in the peripheral hosts. The knowledge management system is connected to an external network server for downloading at least one of the application programs required by the management software through a software download module if the required application programs are not found.

The present invention provides a computer readable recording medium, used for storing a knowledge management database having a plurality of knowledgebase tables, wherein each of the knowledgebase tables is corresponds to one management software and provides a plurality of data required for implementing the management software in a management host. The data comprises network configuration data, software licensing data, and software configuration data. The network configuration data comprises a domain name of a network connecting the management host and configuration data of a plurality of peripheral hosts in the network for connecting the management host to the peripheral hosts. The software licensing data comprises licensing data of a plurality of application programs installed in the peripheral hosts required by the management software for verifying the legitimacy of the application programs. The software configuration data comprises configuration data between the management software and the application programs for enabling the management software to make use of the resource of the application programs.

According to an embodiment of the present invention, wherein the software licensing data comprises software license agreements (SLAs) and end user licensing agreements (EULAs) of the application programs.

According to an embodiment of the present invention, wherein the application programs comprises operating systems, Java development Kits (JDKs), structured query language server (SQL server), and middleware.

According to an embodiment of the present invention, wherein the network configuration data comprises the domain name of the network connecting the knowledge management system and the host names, database names, internet protocol (IP) addresses, port numbers, user IDs, and passwords of the peripheral hosts in the network.

According to an embodiment of the present invention, wherein the software configuration data comprises request handlers, active directories, service users, Kerberos securities, port numbers, database entries, and policy settings. In addition, the software configuration data further comprises an ID, a host name, a port number, metadata updates, group policy settings, and database updates of a backend server.

In the present invention, the parameters required for implementing management software is stored in a knowledge management database. In the process of implementation, setup modules provided by a knowledge management system is used for guiding users to input the parameters one by one so as to complete the procedures such as network connection, software licensing, and software configuration. Therefore, the implementation of the management software is simplified. In addition, due to the parameters are all integrated and arranged by a single knowledge management database, software vendors can modify the knowledge management database and users may update their own knowledge management database at any time, such that the flexibility and convenience for installing and using the management are enhanced.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram illustrating a conventional enterprise system.

FIG. 2 is a block diagram of a knowledge management system according to a first embodiment of the present invention.

FIG. 3 is a flow chart illustrating a method for implementing management software with use of a knowledge management system according to a second embodiment of the present invention.

FIG. 4 is a flow chart illustrating a method for obtaining and updating the software licensing data with use of the software licensing module according to the second embodiment of the present invention.

FIG. 5 is a flow chart illustrating a method for obtaining and updating the software configuration data with use of the software configuration module according to the second embodiment of the present invention.

FIG. 6 depicts an example of a knowledge management database according to a third embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

As an enterprise software is implemented into an enterprise, professional experts are required to make use of the equipments (ex. an enterprise resource planning (ERP) system and an exchange server) existing in the enterprise's server to install the enterprise software in a management host and to configure the management host with peripheral hosts such as the ERP system and the exchange server. Due to the complexity of the ERP system, the stable enterprise software fitting the requirements of the client may merely be established after dealing with hundreds of dialog windows, inputting a great number of parameters, and repetitively installing, testing, modifying and re-testing the enterprise software.

In the present invention, the parameters required for implementing the enterprise software are predetermined, classified, and recorded in a knowledge management database of a knowledge management system. Through the setup modules provided by the knowledge management system, users are able to input a few customer-site-specific parameters into the knowledge management database, so as to complete the implementation of the enterprise software. As such, the costs and manpower on accomplishing the implementation can be minimized. In order to make the present invention more understandable, several embodiments are described below as examples to prove that the invention can actually be realized.

First Embodiment

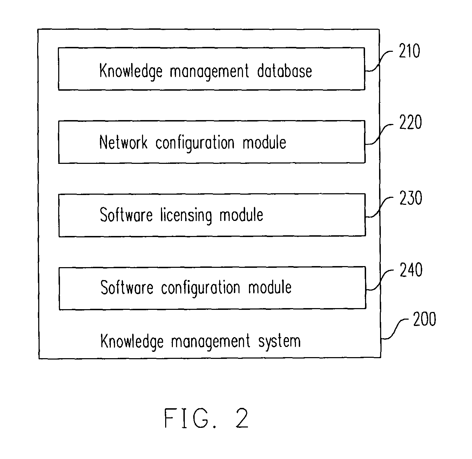

FIG. 2 is a block diagram of a knowledge management system according to a first embodiment of the present invention. Referring to FIG. 2, a knowledge management system 200 in the present embodiment is configured in a management host installed with management software, so as to provide data required in the process of implementing the management software. The management software is, for example but not limited to, enterprise software.

The knowledge management system 200 includes a knowledge management database 210, a network configuration module 220, a software licensing module 230 and a software configuration module 240. Here, the knowledge management database 210 further includes a plurality of knowledgebase tables respectively corresponding to different management software, and the parameters required for implementing each corresponding management software are recorded in the knowledgebase table 210. The parameters can be classified into software licensing data, network configuration data and software configuration data according to various functions that the parameters are applied to. Based on different requirements for a variety of management software, software vendors are capable of establishing said data beforehand in the factory and setting up most of the general parameters (the most complicated parts) in advance. Relatively speaking, as the management software is implemented at a client end, the users may call the parameters to be further set from the knowledge management database 210 by individually employing the software licensing module 220, the network configuration module 230 and the software configuration module 240 supplied by the knowledge management system 200. Through a simple user interface, the users are able to input the corresponding parameters and update the data stored in the knowledge management database 210. As all the parameters are thoroughly inputted, the management software may communicate with the equipments existing in the client's server end and exploit the resources based on the data recorded in the knowledge management database 210. Elaborations are provided hereinafter to exemplify the functions of the network configuration module 220, the software licensing module 230 and the software configuration module 240.

The network configuration module 220 is utilized to acquire both a domain name of a network connecting the knowledge management system 200 and the network configuration data of a plurality of peripheral hosts in the network. The network configuration data are, for example, host names of the peripheral hosts, database names, internet protocol (IP) addresses, port numbers, users' accounts, passwords, and so on. The peripheral hosts may be servers including the ERP system server, the exchange server, a SQL server, an active directory service server, and a backend server, for example.

Through the network configuration module 220, a dialog window is launched for the users to input the aforesaid network configuration data, so as to update the network configuration data recorded in the knowledgebase tables. After the setting of all the network configuration data is completed, the management host is then allowed to connect the peripheral hosts.

The software licensing module 220 is adopted to obtain the software licensing data of a plurality of application programs installed in the peripheral hosts. The application programs are, for example, operating systems, java development kits (JDKs), structured query language (SQL) servers, middleware, and so forth. Similar to the network configuration module 220, the software licensing module 230 also requires the users to input software license agreement (SLA), end user licensing agreement (EULA), or other software licensing data through popping up the dialog window to verify the legitimacy of the application programs.

The software configuration module 240 is employed to collect the configuration data of the application programs configured in the peripheral hosts, such that the management software may effectively make use of the resources supplied by the application programs. For example, given that the management software needs to access a database of the ERP system, the software configuration module is required for specifying a path to the database in the knowledge management database and for setting up the user's account, the password and other necessary data to log in the database, such that the management software can automatically access the database afterwards if deemed necessary.

The software configuration data include, for example, request handlers, active directories, service users, Kerberos security, port numbers, database entries, policy settings and other configuration data. Moreover, the software configuration module 240 may also open the dialog window to invite the users to input the aforesaid software configuration data, and update related fields of the knowledgebase table.

It should be noted that a software downloading module (not shown) may be separately configured in the knowledge management system 200 to connect an external network server for downloading at least one of the application programs required by the management software. For example, when the management software needs to call JDK function, the software downloading module is activated to connect to websites at which the JDK is provided and to download said JDK to the peripheral hosts or the management host to support the management software at any time. Further, the downloaded application programs may be licensed through the software licensing module 220, and the licensed application programs to be used by the management software are configured by the software configuration module 210. However, said processes for downloading and accommodating application programs are not limited in the present embodiment.

Said knowledge management system is, for example, pre-installed in the management host. As the implementation of the management software is actually in process, said software licensing module 220, said network configuration module 230 and said software configuration module 240 are called one by one for setting up the parameters. An embodiment is provided hereinafter to demonstrate detailed steps of implementing the management software with use of the knowledge management system.

Second Embodiment

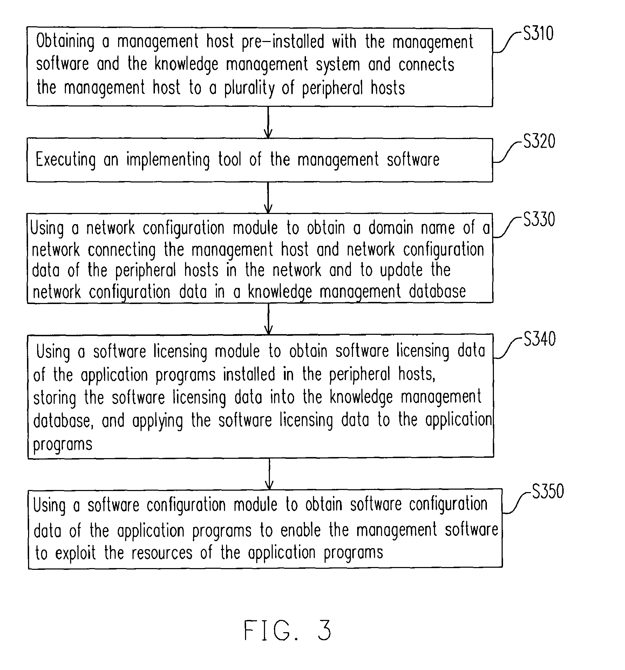

FIG. 3 is a flow chart illustrating a method for implementing management software with use of a knowledge management system according to a second embodiment of the present invention. Referring to FIG. 3, various setup modules supported by the knowledge management system described in the previous embodiment are adopted to access the knowledge management database, so as to provide required data for the implementation of the management software.

First, a user purchases a management host pre-installed with the management software and the knowledge management system from a software vendor and connects the management host to a plurality of existing peripheral hosts (step S310). The connection refers to network connections or connections through different hardware interfaces in the present embodiment, while the mode of the connection is not limited here.

Thereafter, the management host is turned on and an implementing tool of the management software is executed (step S320). Said implementing tool then calls a network configuration module of the knowledge management system, so as to obtain both a domain name of a network connecting the management host and network configuration data of the peripheral hosts in the network and to update the network configuration data in a knowledge management database (step S330). The network configuration data can be acquired through launching a dialog window by the network configuration module to display the required entries and the predetermined value of the network configuration data to be set. Thereby, the user is able to input the correct network configuration data. After the network configuration data of each of the peripheral hosts are all inputted by the user, the network configuration module then updates the data stored in the knowledgebase table corresponding to the management software. With reference to the knowledgebase table, the management host is capable of establishing the network connections with all of the peripheral hosts.

Moreover, in step S330, a service username and a password are further obtained to update a registry entry of a request handler. Said service username may be the username of the former ERP system or other usernames stored in an active directory server (ADS). All of the users' names can be enumerated on the dialog window launched by the network configuration module for the user to select.

After the connections to the peripheral hosts are fully established, it is then necessary to verify the legitimacy of the application programs required by the management software installed in the peripheral hosts. Accordingly, the implementing tools may call a software licensing module of the knowledge management system, so as to obtain software licensing data of the application programs, store it into the knowledge management database, and apply it to the application programs (step S340). Said application programs are, for example, operating systems, JDKs, SQL servers, middleware, and so forth. On the other hand, the software licensing data include but not limited to SLA, EULA, or other software licensing data of the application programs.

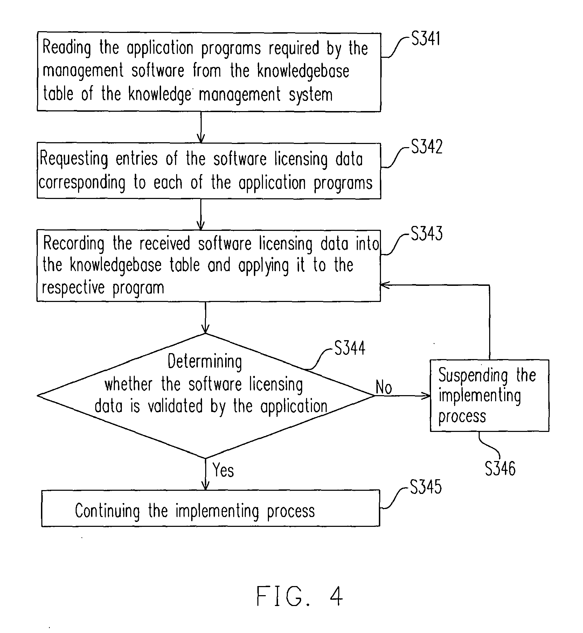

Besides, the step S340 may be further divided into a plurality of sub-steps which are explained by the following examples. FIG. 4 is a flow chart illustrating a method for obtaining and updating the software licensing data with use of the software licensing module according to the second embodiment of the present invention. Referring to FIG. 4, the software licensing module first reads the application programs required by the management software from the knowledgebase table of the knowledge management system (step S341). The entries and the versions of the application programs are also read. Next, according to instructions shown on a screen of the management host, the user is required to input the software licensing data of the application programs (step S342). In the step S342, for example, a simple user interface listing names of the application programs is provided. Moreover, in the interface, a blank column is reserved for the user to input a serial number of one of the application programs. After the software licensing data inputted by the user are received by the software licensing module, it is recorded into the knowledgebase table, applied to the respective application (step S343). Then, the software licensing data is determined whether validated by the application (step S344). Suppose that the software licensing data is validated by the application, the implementing process is going to be performed subsequently (step S345). Nevertheless, if the software licensing data is invalid, or the corresponding application program is not found, a warning message demanding the legitimate application program is then transmitted to the user, and the implementing process of the management software is temporarily suspended (step S346). The user is forced to return to the step S342 and required to input the software licensing data until the correct software licensing data are received.

It should be noted that in the step S341, the software licensing module may further search all the peripheral hosts connected to the management host for the application programs after the software licensing data of the application program is obtained. In case that no application program is found, a software downloading module may be utilized to connect an external network server for downloading at least one of the application programs required by the management software and proceeding with the following licensing process.

After the license of the application programs is confirmed, some parameters by which the management software can communicate with the application programs are going to be configured. Here, the implementing tool may call a software configuration module of the knowledge management system, so as to obtain software configuration data of the application programs configured in the peripheral hosts. Thereby, the management software is permitted to exploit the resources of the application programs (step S350). In the step S350, various application programs are equipped with different parameters and configurations, and related exemplary descriptions are provided hereinafter.

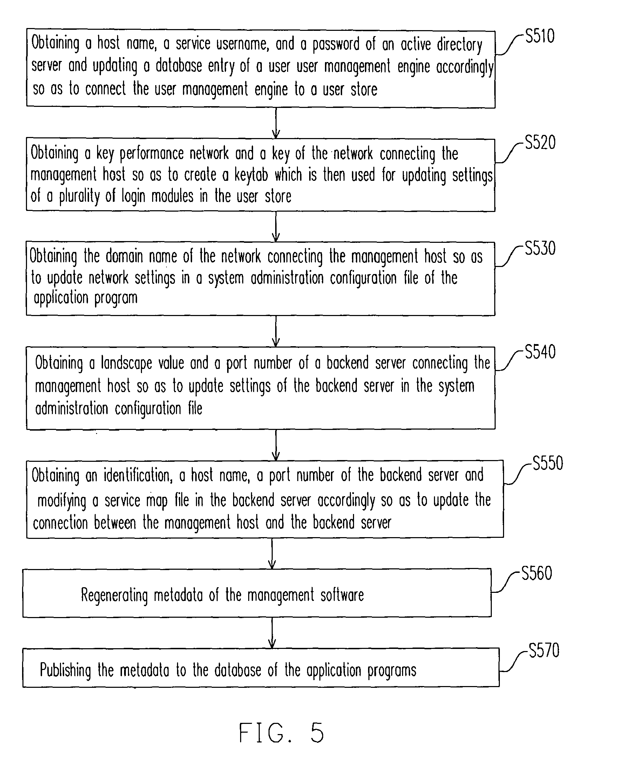

FIG. 5 is a flow chart illustrating a method for obtaining and updating the software configuration data with use of the software configuration module according to the second embodiment of the present invention. Referring to FIG. 5, in step S510, a host name, a service username and a password of the ADS are obtained by the software configuration module, so as to update a database entry of a user management engine (UME) and connect the same to a user store. Here, the data can be obtained by establishing a connection with use of a property sheet of Kerberos. Once the connection is built up, a group path and a user path are then provided to the ADS by the software configuration module.

After the UME is connected to the user store and the configuration of the UME is completed, a key performance network (KPN) and a key of the network connecting the management host are obtained by the software configuration module in step S520, so as to create a keytab by which settings of a plurality of login modules in the user store are updated. As such, the configuration of Kerberos is accomplished. In detail, said data are obtained by calling a java management extension (JME) application program interface (API), such that a domain name (e.g. xxx.company.com), a path of a domain controller (e.g. dc.xxx.company.com), a port number (e.g. port 88), the service username, the password and other data are obtained.

In step S530, the domain name of the network connecting the management host is obtained by the software configuration module, so as to update the network settings in a system management configuration file of the application program. The file is, for example, an extensible markup language (XML) file, and all the network entries in the file have to be changed to a customer's domain.

In step S540, a landscape value and a port number of a backend server connecting the management host are obtained by the software configuration module, so as to update the setting of the backend server in the system administration configuration file.

In step S550, an identification, a host name and a port number of the backend server are acquired by the software configuration module. Thereby, a service map file in the backend server is revised for updating the connection between the management host and the backend server. Moreover, in the step S540, if the user plays different roles in the backend server, a new role may be created in a role management file in the backend server.

In step S560, metadata of the management software are regenerated by the software configuration module. In the step S560, the metadata are regenerated by calling a java naming and directory interface (JNDI) API instruction to search a static store bean, for example. Next, in step S570, the regenerated metadata are published to the database of the application programs.

In view of the foregoing, the aforesaid steps are all required to pass a proof of concept (POC) procedure of the management software. However, the executing order of said steps is exemplary. The user may, based on actual demands, adjust the executing order of said steps or add steps for updating other software configuration data. The present invention does not pose limitations on the executing order of said steps.

It should be noted that the aforesaid steps are performed at the client end, while the software configuration module may be used to configure the parameters between the management software and the application programs when the management software is installed and configured in the management host at a service end. Here, a plurality of group policy settings of the exchange server may be obtained and completed by the software configuration module. For example, a corresponding value is established for a group named TrustedSendersGroup, and the data of a communication user or the data of a service user including a Kerberos user are inputted to the exchange server.

In addition, prerequisites may be verified by using the software configuration module, so as to perform the installation of the management software. Said prerequisites to be verified include: a. enabling .Net programmability support; b. ensuring that the office applications are closed; c. ensuring that the updating files of the office applications are installed; and d. ensuring a patch level is updated. As the verification of the prerequisites is completed, an execution file for installing the management software may then be activated. Namely, a batch file is executed to load a dynamic link library (DLL) and to start an event logging of the installation process of the management software.

In view of the foregoing, the parameters are configured by the user through the network configuration module, the software licensing module and the software configuration module based on the actual demands on the implementation of the management software in the present embodiment. With a step-by-step guidance, the user is able to input the required parameters for executing the management software, which expedites the implementation of the management software. The data inputted by the user are all recorded in the knowledge management database, such that the user may revise or update the data whenever necessary. Another embodiment is further provided hereinafter to elaborate data entries and data contents recorded in the knowledge management database.

Third Embodiment

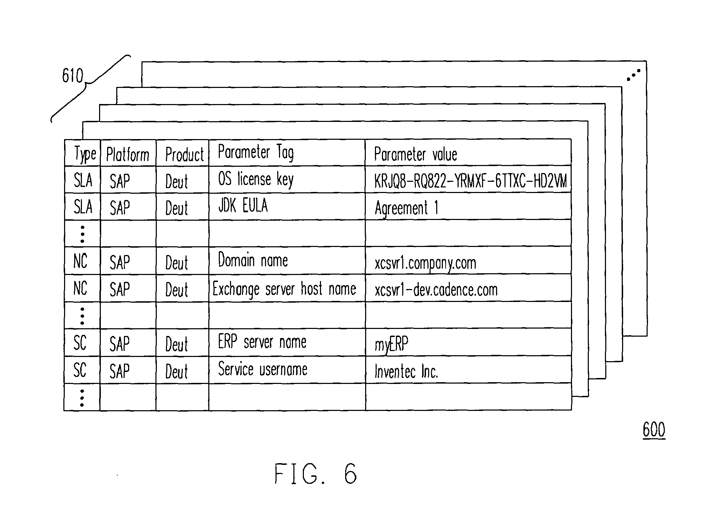

FIG. 6 depicts an example of a knowledge management database according to a third embodiment of the present invention. Referring to FIG. 6, a knowledge management database 600 of the present embodiment is, for example, stored in a computer-readable recording medium, so as to provide the data required for implementing management software in a management host. The knowledge management database 600 includes a plurality of knowledgebase tables 610, each of which corresponds to single management software and records the data including network configuration (NC in FIG. 6) data, software licensing data (SLA in FIG. 6) and software configuration (SC in FIG. 6) data respectively described hereinafter.

The network configuration data include, for example, a domain name of a network connecting the management host, host names of peripheral hosts, database names, IP addresses, port numbers, users' accounts, passwords and other network configuration data. Thereby, the management host can be connected to the peripheral hosts.

The software licensing data include SLAs, EULAs, or other software licensing data of a plurality of application programs installed in the peripheral hosts, so as to verify the legitimacy of the application programs.

The software configuration data include, for example, request handlers, active directories, service users, Kerberos securities, port numbers, database entries, policy settings and other configuration data of the application programs installed in the peripheral hosts, such that the management software can exploit the resources of the software. As regards a backend server, the configuration data further include an identification, a host name, a port number, metadata updates, group policy settings, database updates, and other configuration data of the backend server.

Said knowledge management database is configured in the management host, and thus the required data for implementing the management software can be provided. However, a software vendor may also establish an identical knowledge management database at a service end to maintain and update the contents of the database at all times. Thereby, the user may connect the knowledge management database provided at the service end through a network connection and download the latest information for updating the contents of the knowledge management database possessed by the user. As such, the management software can be updated in a more flexible and convenient manner.

To sum up, the knowledge management system and the method for implementing the management software by using the knowledge management system according to the present invention at least have the following advantages:

1. The complicated parameters required for implementing the management software are classified and recorded in the knowledge management database. Moreover, based on the actual demands on implementing the management software, the necessary data may be provided or inputted by the user, accelerating the implementing process of the management software.

2. The parameters of different management software are recorded in respective knowledgebase tables, enabling the vendor to update the entries and the contents of the parameters and optimizing the use of the management software.

3. The client is able to input a few customer site specific parameters induced from general software and hardware environment at the client end. Through inputting or revising the parameters in the simple dialog window, the management software can be fully implemented at the client end, thus reducing the complexity of implementation of the management software to a great extent.

Although the present invention has been disclosed above by the embodiments, they are not intended to limit the present invention. Anybody skilled in the art can make some modifications and alteration without departing from the spirit and scope of the present invention. Therefore, the protecting range of the present invention falls in the appended claims.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A knowledge management system, used for providing the data required for implementing management software in a management host, the system comprising:
a knowledge management database including a plurality of knowledgebase tables, each of which records software licensing data, network configuration data, and software configuration data;
a network configuration module, used for obtaining a domain name of a network connecting the knowledge management system and the network configuration data of a plurality of peripheral hosts in the network so as to connect the management host with the peripheral hosts and update the network configuration data in the corresponding knowledgebase table; and
a software licensing module, used for obtaining the software licensing data of a plurality of application programs required by the management software to verify the legitimacy of the application programs and update the software licensing data in the knowledgebase table;
a software configuration module, used for obtaining configuration data of the application programs to enable the management software to make use of the resource of the application programs and update the software configuration data in the knowledgebase table.

2. The knowledge management system according to claim 1, further comprising:
a software downloading module, used for connecting an external network server to download at least one of the application programs required by the management software.

3. The knowledge management system according to claim 1, wherein the software licensing data comprises software license agreements (SLAs) and end user licensing agreements (EULAs) of the application programs.

4. The knowledge management system according to claim 1, wherein the application programs comprises operating systems, Java development Kits (JDKs), structured query language server (SQL server), and middleware.

5. The knowledge management system according to claim 1, wherein the network configuration data comprises the domain name of the network that the knowledge management system is connected to and the host names, database names, internet protocol (IP) addresses, port numbers, user IDs, and passwords of the peripheral hosts in the network.

6. The knowledge management system according to claim 1, wherein the software configuration data comprises request handlers, active directories, service users, Kerberos securities, port numbers, database entries, and policy settings.

7. The knowledge management system according to claim 1, wherein the software configuration data comprises an ID, a host name, a port number, metadata updates, group policy settings, and database updates of a backend server.

8. The knowledge management system according to claim 1, wherein the management software comprises Enterprise software.

9. A method for implementing management software using a knowledge management system, suitable for implementing management software in a management host according to the data provided by a knowledge management system, the method comprising:
obtaining a domain name of a network connecting the knowledge management system and network configuration data of a plurality of peripheral hosts in the network so as to connect the management host with the peripheral hosts and update the network configuration data in a knowledge management database of the knowledge management system through a network configuration module of the knowledge management system;
obtaining software licensing data of a plurality of application programs installed in the peripheral hosts required by the management software so as to verify the legitimacy of the application programs and update the software licensing data in the knowledge management database through a software licensing module of the knowledge management system; and
obtaining software configuration data of the application programs to enable the management software to make use of the resource of the application programs and update the software configuration data in the knowledge management database through a software configuration module of the knowledge management system.

10. The method for implementing management software using a knowledge management system according to claim 9, wherein the knowledge management database comprises a plurality of knowledgebase tables, each of which corresponds to different management software and records the network configuration data, software licensing data, and software configuration data of the management software.

11. The method for implementing management software using a knowledge management system according to claim 9, the step of obtaining software licensing data of the application programs to verify the legitimacy of the application programs comprises:
reading the application programs required by the management software from the knowledge management database;
requesting entries of the software licensing data corresponding to each of the application programs;
receiving the inputted software licensing data and recording the software licensing data into the knowledge management database;
determining whether the software licensing data is validated by the application;
if the software licensing data is valid, continuing the implementing procedure of the management software; and
if the software licensing data is invalid, suspending the implementing procedure of the management software.

12. The method for implementing management software using a knowledge management system according to claim 11, wherein after reading the application programs, the method further comprising:
searching the application programs in the peripheral hosts; and
if the application programs are not found, connecting the knowledge management system with an external network server and downloading at least one of the application programs required by the management software through a software download module.

13. The method for implementing management software using a knowledge management system according to claim 9, wherein the step of obtaining and updating the network configuration data of the application programs comprises:
obtaining a user name and a password of a service user of a request handler and updating a register entry of the request handler accordingly.

14. The method for implementing management software using a knowledge management system according to claim 9, wherein the step of obtaining and updating the software licensing data of the application programs comprises:
obtaining software license agreements and end user licensing agreements of the application programs.

15. The method for implementing management software using a knowledge management system according to claim 9, wherein the application programs comprises operating systems, Java development kits, structured query language server, and middleware.

16. The method for implementing management software using a knowledge management system according to claim 9, wherein the step of obtaining and updating the software configuration data of the application programs comprises:
obtaining a host name, a service username, and a password of an active directory server and updating a database entry of a user management engine (UME) accordingly so as to connect the user management engine to a user store.

17. The method for implementing management software using a knowledge management system according to claim 16, wherein after connecting the user management engine to the user store, the method further comprising:
obtaining a key performance network (KPN) and a key of the network that the management host is connected to so as to create a keytab which is then used for updating settings of a plurality of login modules in the user store.

18. The method for implementing management software using a knowledge management system according to claim 9, wherein the step of obtaining and updating the software configuration data of the application programs comprises:
obtaining the domain name of the network that the management host is connected to so as to update network settings in a system administration configuration file of the application program.

19. The method for implementing management software using a knowledge management system according to claim 9, wherein the step of obtaining and updating the software configuration data of the application programs comprises:
obtaining a landscape value and a port number of a backend server that the management host is connected to so as to update settings of the backend server in the system administration configuration file.

20. The method for implementing management software using a knowledge management system according to claim 19, wherein the step of obtaining and updating the software configuration data of the application programs comprises:
obtaining an ID, a host name, a port number of the backend server so and modifying a service map file in the backend server accordingly so as to update the connection between the management host and the backend server.

21. The method for implementing management software using a knowledge management system according to claim 9, wherein the step of obtaining and updating the software configuration data of the application programs comprises:
regenerating metadata of the management software; and
publishing the metadata to the database of the application program.

22. The method for implementing management software using a knowledge management system according to claim 9, wherein the step of obtaining and updating the software configuration data of the application programs comprises:
obtaining a plurality of group policy settings of an Exchange server.

23. The method for implementing management software using a knowledge management system according to claim 22, wherein the step of obtaining and updating the software configuration data of the application programs comprises:
creating a plurality of service users in the Exchange server.

24. The method for implementing management software using a knowledge management system according to claim 23, wherein the service users comprises communication users and Kerbero users.

25. The method for implementing management software using a knowledge management system according to claim 9, wherein the step of obtaining and updating the software configuration data of the application programs comprises:
obtaining and checking prerequisites of the application programs so as to activate installing procedure of the management software.

26. A computer readable recording medium, used for storing a knowledge management database including a plurality of knowledgebase tables, wherein each of the knowledgebase tables corresponds to one management software and provides a plurality of data required for implementing the management software in a management host, the data comprising:
network configuration data comprising a domain name of a network connecting the management host and configuration data of a plurality of peripheral hosts in the network for connecting the management host to the peripheral hosts;
software licensing data comprising licensing data of a plurality of application programs installed in the peripheral hosts required by the management software for verifying the legitimacy of the application programs; and
software configuration data comprising configuration data between the management software and the application programs for enabling the management software to make use of the resource of the application programs.

27. The computer readable recording medium according to claim 26, wherein the software licensing data comprises software license agreement and end user licensing agreement of the application programs.

28. The computer readable recording medium according to claim 26, wherein the network configuration data comprises the domain name of the network connecting the knowledge management system and the host names, database names, internet protocol addresses, port numbers, user IDs, and passwords of the peripheral hosts in the network.

29. The computer readable recording medium according to claim 26, wherein the software configuration data comprises request handlers, active directories, service users, Kerberos securities, port numbers, database entries, and policy settings.

30. The computer readable recording medium according to claim 26, wherein the software configuration data comprises an ID, a host name, a port number, metadata updates, group policy settings, and database updates of a backend server.
